# NEUE EUROPÄISCHE PATENTSCHRIFT

(11) **EP 1 910 469 B2**
(45) Veröffentlichungstag und Bekanntmachung des Hinweises auf die Entscheidung über den Einspruch: **09.12.2015**
(45) Hinweis auf die Patenterteilung: 19.09.2012
(21) Anmeldenummer: 06724169.5
(22) Anmeldetag: 08.04.2006
(51) Int. Cl.: C08L 69/00, C08L 55/02, C08L 25/12

(54) **VERFAHREN ZUR HERSTELLUNG VON SCHLAGZÄHMODIFIZIERTEN POLYCARBONAT- ZUSAMMENSETZUNGEN**
PRODUCTION METHODS OF POLYCARBONATE COMPOSITIONS WITH MODIFIED RESILIENCE
PROCEDES DE PRODUCTION DE COMPOSITIONS DE POLYCARBONATE A RESILIENCE MODIFIEE

(30) Priorität: 21.04.2005 DE 102005018472
(43) Veröffentlichungstag der Anmeldung: 16.04.2008
(73) Patentinhaber: Covestro Deutschland AG, 51373 Leverkusen (DE)
(72) Erfinder: SEIDEL, Andreas, 41542 Dormagen (DE); ECKEL, Thomas, 41540 Dormagen (DE); WARTH, Holger Flat A, 15/f The Harbourview, The Peak, Hong Kong (CN); WENZ, Eckhard, 50679 Köln (DE); KELLER, Bernd, 47608 Geldern (DE); WITTMANN, Dieter, 51375 Leverkusen (DE)
(74) Vertreter: Levpat
(86) Internationale Anmeldenummer: PCT/EP2006/003233
(87) Internationale Veröffentlichungsnummer: WO 2006/111286

(56) Entgegenhaltungen:
- EP-A- 0 219 090
- EP-A- 0 488 932
- WO-A-2005/000962
- WO-A1-2004/050720
- US-A- 4 548 987

## Beschreibung

Die Erfindung betrifft ein Verfahren zur Herstellung schlagzähmodifizierter Polycarbonat-Zusammensetzungen mit verbesserter Verarbeitungsstabilität zur Herstellung komplexer Bauteile, die sich durch eine Kombination aus verbesserter Tieftemperaturzähigkeit und guter Spannungsrissbeständigkeit unter Chemikalieneinwirkung auszeichnen.

Thermoplastische Formmassen aus Polycarbonaten und ABS-Polymerisaten (Acrylnitril/Butadien/Styrol) sind seit langem bekannt. So beschreibt die US 3 130 177 A gut verarbeitbare Formmassen aus Polycarbonaten und Pfropfpolymerisaten von Monomermischungen aus Acrylnitril und einem aromatischen Vinylkohlenwasserstoff auf Polybutadien.

Aus der EP 0 372 336 A2 sind PC/ABS-Zusammensetzungen (Polycarbonat/Acrylnitril/Butadien/Styrol) mit hoher Zähigkeit bei tiefen Temperaturen bekannt die dadurch gekennzeichnet sind, dass die Propfpolymerisate und/oder die Copolymerisate zumindest teilweise durch Pfropfpolymerisate und/oder Copolymerisate ersetzt sind, in denen die Pfropfauflage und/oder das Copolymerisat mindestens 86 Gew.-% Vinylaromaten enthält.

Aus der DE 102 55 825 A1 sind PC/ABS-Zusammensetzungen mit verbesserter Oberflächenqualität bekannt, enthaltend eine durch Cofällung erhaltene Mischung aus mindestens einem durch Emulsionspolymerisation hergestellten Pfropfpolymerisat B*.1 und mindestens einem durch Emulsionspolymerisation hergestellten thermoplastischen Vinyl(co)polymerisat B*.2, sowie mindestens ein durch Lösungs-, Masse- oder Suspensionspolymerisation hergestelltes thermoplastisches Vinyl(co)polymerisat C*, wobei sich in einer bevorzugten Ausführungsform die Vinyl(co)polymerisate B*.2 und C* im Acrylnitrilgehalt um 1 bis 15 Gew.-%, vorzugsweise um 2 bis 10 Gew.-%, besonders bevorzugt um 2,5 bis 7,5 Gew.-% unterscheiden.

Aus der EP 0 767 215 A1 sind Zusammensetzungen bekannt enhaltend Polycarbonat, ein (Acrylnitrilfreies) kautschukmodifiziertes Styrolharz und als Phasenvermittler ein Copolymer oder ein Pfropfcopolymer. Die Copolymere bzw. die Pfropfhüllen der Pfropfcopolymere in den erfindungsgemäßen Zusammensetzungen der EP 0 767 215 A1 zeichnen sich dadurch aus, dass sie auf molekularer Ebene eine uneinheitliche Verteilung hinsichtlich des Mengenverhältnisses der zugrunde liegenden Monomeren aufweisen, wodurch sich unterschiedliche individuelle Löslichkeitsparameter ergeben. Für den Fall eines Styrol-Acrylnitril-Copolymers (SAN) entsprechen die in der EP 0767 215 A1 angegebenen Löslichkeitsparameter anhand der dargelegten Berechnungsgrundlage einem gewichtsgemittelten Acrylnitrilanteil von 2 bis etwa 12,5 Gew.-% und einer Differenz zwischen minimalen und maximalen molekülindividuellen Acrylnitrilgehalten von 8 bis 26 Gew.-%.

Die der Erfindung zugrunde liegende Aufgabe besteht darin, PC/ABS-Formmassen mit verbesserter Verarbeitungsstabilität zur Herstellung komplexer Formteile für den Automobilbau bereitzustellen, die sich durch eine Kombination aus einer über ein weites Verarbeitungsfester hinweg guten Tieftemperaturzähigkeit und guter Spannungsrissbeständigkeit unter Chemikalieneinwirkung auszeichnen. Eine weitere Aufgabe der Erfindung war die Bereitstellung von Formmassen, die zusätzlich zu den oben genannten Anforderungen auch die Anforderungen der europäischen Automobilindustrie an Materialien im Automobilinnenraumbau hinsichtlich der Begrenzung der Emission flüchtiger organischer Komponenten erfüllen.

Die Aufgabe wird gelöst durch ein Verfahren zur Herstellung schlagzähmodifizierter Polycarbonat-Zusammensetzungen, die zwei Copolymere aus einer vinylaromatischen Verbindung und einer funktionalisierten vinylolefinischen Verbindung enthalten, wobei
a) die Copolymere in einem bestimmten Mengenverhältnis zueinander eingesetztwerden, und
b) die beiden Copolymere aus denselben Monomeren aufgebaut sind und sich dabei im Verhältnis der eingestzten Monomere in nachstehend definierter Weise unterscheiden,
die gewünschten Eigenschaften aufweisen.

Gegenstand der vorliegenden Erfindung sind daher Zusammensetzungen enthaltend
A) 30 bis 80 Gew.-Teile, bevorzugt 40 bis 75 Gew.-Teile, besonders bevorzugt 40 bis 60 Gew.-Teile aromatisches Polycarbonat und/oder Polyestercarbonat,
B) 5 bis 60 Gew.-Teile, bevorzugt 10 bis 45 Gew.-Teile, besonders bevorzugt 10 bis 30 Gew.-Teile eines Pfropfpolymerisats
   und
C) 10 bis 60 Gew.-Teile, bevorzugt 15 bis 40 Gew.-Teile, besonders bevorzugt 20 bis 40 Gew.-Teile einer Mischung aus
   C.1) 40 bis 92 Gew.-%, bevorzugt 60 bis 90 Gew.-%, besonders bevorzugt 65 bis 90 Gew.-% bezogen auf die Komponente C) eines ersten Copolymerisats hergestellt nach dem Lösungs-, Masse- oder Suspensionsverfahren aus
      C.1.1) 65 bis 75 Gew.-%, bevorzugt 70 bis 74 Gew.-% bezogen auf Komponente C.1) mindestens eines Monomeren ausgewählt aus der Gruppe der Vinylaromaten (wie beispielsweise Styrol, α-Methylstyrol) und kernsubstituierten Vinylaromaten (wie beispielsweise p-Methylstyrol, p-Chlorstyrol) und
      C.1.2) 25 bis 35 Gew.-%, bevorzugt 26 bis 30 Gew.-% bezogen auf Komponente C.1) mindestens eines Monomeren ausgewählt aus der Gruppe der Vinylcyanide (wie beispielsweise ungesättigte Nitrile wie Acrylnitril und Methacrylnitril), (Meth)Acrylsäure-(C₁-C₈)-Alkylester (wie beispielsweise Methylmethacrylat, n-Butylacrylat, tert.-Butylacrylat), ungesättigte Carbonsäuren und Derivate ungesättigter Carbonsäuren (beispielsweise Maleinsäureanhydrid und N-Phenyl-Maleinimid)
      und
   C.2) 8 bis 60 Gew.-%, bevorzugt 10 bis 40 Gew.-%, besonders bevorzugt 10 bis 35 Gew.-% bezogen auf die Komponente C) eines zweiten Copolymerisats hergestellt nach dem Lösungs-, Masse- oder Suspensionsverfahren aus
      C.2.1) 75,1 bis 85 Gew.-%, bevorzugt 76 bis 80 Gew.-% bezogen auf Komponente C.2) mindestens eines Monomeren ausgewählt aus der Gruppe der Vinylaromaten (wie beispielsweise Styrol, α-Methylstyrol) und kernsubstituierten Vinylaromaten (wie beispielsweise p-Methylstyrol, p-Chlorstyrol) und
      C.2.2) 15 bis 24,9 Gew.-%, bevorzugt 20 bis 24 Gew.-% bezogen auf Komponente C.2) mindestens eines Monomeren ausgewählt aus der Gruppe der Vinylcyanide (wie beispielsweise ungesättigte Nitrile wie Acrylnitril und Methacrylnitril), (Meth)Acrylsäure-(C₁-C₈)-Alkylester (wie beispielsweise Methylmethacrylat, n-Butylacrylat, tert.-Butylacrylat), ungesättigte Carbonsäuren und Derivate ungesättigter Carbonsäuren (beispielsweise Maleinsäureanhydrid und N-Phenyl-Maleinimid),
      wobei die Copolymerisate mittlere Molekulargewichte M_{w} zwischen 15.000 und 300.000 besitzen und sich der Gehalt der Komponente C.1.2) in Copolymer C.1) und der Gehalt der Komponente C.2.2) in Copolymer C.2) um 2,5 bis 7 Gew.-% voneinander unterscheiden,
und wobei
a) im ersten Schritt die Komponente B oder eine Teilmenge der Komponente B mit der Komponente C oder mit einer Teilmenge der Komponente C zu einem Präcompound durch Compoundierung unter Vakuumentgasung umgesetzt wird, und
b) im zweiten Schritt das Präcompound aus a) mit der Komponente A und gegebenenfalls weiteren Komponenten vermischt und bei Temperaturen von 200 °C bis 300 °C in üblichen Aggregaten wie Innenknetern, Extrudern und Doppelwellenschnecken schmelzcompoundiert oder schmelzextrudiert wird.

In einer bevorzugten Ausführungsform unterscheiden sich der Gehalt der Monomere C.1.2) im Copolymer C.1) und der Gehalt der Monomere C.2.2) im Copolymer C.2) um 3 bis 6 Gew.-% voneinander.

Die erfindungsgemäß geeigneten Komponenten der schlagzähmodifizierten Polycarbonat-Zusammensetzungen werden anschließend beispielhaft erläutert.

### Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 077 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I) 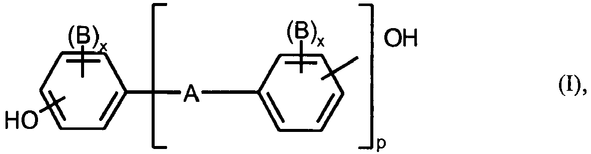 wobei
- A: eine Einfachbindung, C₁ bis C₅-Alkylen, C₂ bis C₅-Alkyliden, C₅ bis C₆-Cycloalkyliden,-O-, -SO-, -CO-, -S-, -SO₂-, C₆ bis C₁₂-Arylen, an das weitere aromatische gegebenenfalls Heteroatome enthaltende Ringe kondensiert sein können,
oder ein Rest der Formel (II) oder (III)

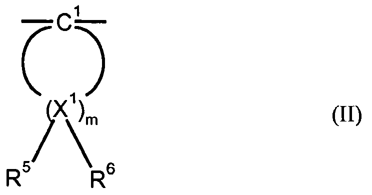

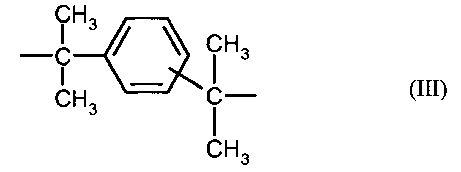

- B: jeweils C₁ bis C₁₂-Alkyl, vorzugsweise Methyl, Halogen, vorzugsweise Chlor und/oder Brom
- x: jeweils unabhängig voneinander 0, 1 oder 2,
- p: 1 oder 0 sind, und
- R⁵ und R⁶: für jedes X¹ individuell wählbar, unabhängig voneinander Wasserstoff oder C₁ bis C₆ Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆ -cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1, 1-Bis-(4-hydroxyphenyl)-cyclohexan, 1,1-Bis-(4-hydroxy-phenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten Diphenole.

Die thermoplastischen, aromatischen Polycarbonate haben mittlere Gewichtsmittelmolekulargewichte (M_{w}, gemessen z. B. durch Ultrazentrifuge oder Streulichtmessung) von 10.000 bis 200.000, vorzugsweise 15.000 bis 50.000, insbesondere von 20.000 bis 40.000, ganz besonders bevorzugt von 24.000 bis 32.000.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US-A 3 419 634) und nach literaturbekannten Verfahren herstellbar. Die Herstellung Polydiorganosiloxanhaltiger Copolycarbonate ist in der DE-A 3 334 782 beschrieben.

Bevorzugte Polycarbonate sind neben den Bisphenol-A-Homopolycarbonaten die Copolycarbonate von Bisphenol-A mit bis zu 15 Mol%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁ bis C₂₂-Alkylgruppen oder durch Halogenatome substituiert sein können, sowie aliphatische C₂ bis C₂₂-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetra-chlorid, 1,4,5,8-Napthalintetracarbon-säuretetrachlorid oder Pyromellithsäuretetrachlorid, in Mengen von 0,01 bis 1,0 Mol% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hepten-2,4,4-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxy-phenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität (ηᵣₑₗ) der aromatischen Polycarbonate und Polyestercarbonate liegt im Bereich 1,18 bis 1,4, vorzugsweise 1,20 bis 1,32 (gemessen an Lösungen von 0,5 g Polycarbonat oder Polyestercarbonat in 100 ml Methylenchlorid-Lösung bei 25°C).

Die thermoplastischen, aromatischen Polycarbonate und Polyestercarbonate können allein oder im beliebigen Gemisch eingesetzt werden.

### Komponente B

Die Komponente B umfasst Pfropfpolymerisate von
B.1) 5 bis 95 Gew.-%, vorzugsweise 30 bis 90 Gew.-% bezogen auf B) einer Mischung aus
   B.1.1) 65 bis 85 Gew.-%, bevorzugt 70 bis 80 Gew.-% bezogen auf B.1 mindestens eines Monomeren ausgewählt aus der Gruppe der Vinylaromaten (wie beispielsweise Styrol, α-Methylstyrol), kernsubstituierten Vinylaromaten (wie beispielsweise p-Methylstyrol, p-Chlorstyrol) und Methacrylsäure-(C₁-C₈)-Alkylester (wie beispielsweise Methylmethacrylat, Ethylmethacrylat) und
   B.1.2) 15 bis 35 Gew.-%, bevorzugt 20 bis 30 Gew.-% bezogen auf B.1 mindestens eines Monomeren ausgewählt aus der Gruppe der Vinylcyanide (wie beispielsweise ungesättigte Nitrile wie Acrylnitril und Methacrylnitril), (Meth)Acrylsäure-(C₁-C₈)-Alkylester (wie beispielsweise Methylmethacrylat, n-Butylacrylat, tert.-Butylacrylat) und Derivate (wie beispielsweise Anhydride und Imide) ungesättigter Carbonsäuren (beispielsweise Maleinsäureanhydrid und N-Phenyl-Maleinimid)
   auf
B.2) 95 bis 5 Gew.-%, vorzugsweise 70 bis 10 Gew.-% wenigstens einer Pfropfgrundlage mit einer Glasübergangstemperatur < 0°C, bevorzugt < -20°C. Die Pfropfgrundlage B.2 hat im allgemeinen eine mittlere Teilchengröße (d₅₀-Wert) von 0,05 bis 10 µm, vorzugsweise 0,1 bis 5 µm, besonders bevorzugt 0,2 bis 1 µm.

Bevorzugte Monomere B.1.1 sind ausgewählt aus mindestens einem der Monomere Styrol, α-Methylstyrol und Methylmethacrylat, bevorzugte Monomere B.1.2 sind ausgewählt aus mindestens einem der Monomere Acrylnitril, Maleinsäureanhydrid und Methylmethacrylat.

Besonders bevorzugte Monomere sind B.1.1 Styrol und B.1.2 Acrylnitril.

Für die Pfropfpolymerisate B geeignete Pfropfgrundlagen B.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren- und Ethylen/Vinylacetat-Kautschuke sowie Mischungen aus solchen Kautschuken bzw. Silikon-Acrylat-Kompositkautschuke, in denen die Silikon- und die Acrylatkomponenten chemisch miteinander (z.B. durch Pfropfung) miteinander verknüpft sind.

Bevorzugte Pfropfgrundlagen B.2 sind Dienkautschuke (z.B. auf Basis Butadien, Isopren) oder Gemische von Dienkautschuken oder Copolymerisate von Dienkautschuken oder deren Gemischen mit weiteren copolymerisierbaren Monomeren (z.B. gemäß B.1.1 und B.1.2). Besonders bevorzugt ist reiner Polybutadienkautschuk.

Besonders bevorzugte Polymerisate B sind z.B. ABS-Polymerisate (Emulsions-, Masse- und Suspensions-ABS), wie sie z. B. in der DE-A 2 035 390 (=US-PS 3 644 574) oder in der DE-A 2 248 242 (=GB-PS 1 409 275) bzw. in Ullmanns, Enzyklopädie der Technischen Chemie, Bd. 19 (1980), S. 280 ff. beschrieben sind. Der Gelanteil der Pfropfgrundlage B.2 beträgt mindestens 30 Gew.%, vorzugsweise mindestens 40 Gew.% (in Toluol gemessen).

Die Pfropfcopolymerisate B werden durch radikalische Polymerisation, z.B. durch Emulsions-, Suspensions-, Lösungs- oder Massepolymerisation, vorzugsweise durch Emulsions- oder Massepolymerisation hergestellt.

Besonders geeignete Pfropfkautschuke sind ABS-Polymerisate, die durch Redox-Initiierung mit einem Initiatorsystem aus organischem Hydroperoxid und Ascorbinsäure gemäß US-P 4 937 285 hergestellt werden.

Geeignete Acrylatkautschuke gemäß B.2 der Polymerisate B sind vorzugsweise Polymerisate aus Acrylsäurealkylestern, gegebenenfalls mit bis zu 40 Gew.%, bezogen auf B.2 anderen polymerisierbaren, ethylenisch ungesättigten Monomeren. Zu den bevorzugten polymerisierbaren Acrylsäureestern gehören C₁ bis C₈-Alkylester, beispielsweise Methyl-, Ethyl-, Butyl-, n-Octyl- und 2-Ethylhexylester; Halogenalkylester, vorzugsweise Halogen-C₁-C₈-alkylester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Allylmethacrylat; mehrfach ungesättigte heterocyclische Verbindungen, wie Trivinyl- und Triallylcyanurat; polyfunktionelle Vinylverbindungen wie Di- und Trivinylbenzole, aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.%, bezogen auf die Pfropfgrundlage B.2.

Bei cyclischen vernetzenden Monomeren mit mindestens drei ethylenisch ungesättigten Gruppen ist es vorteilhaft, die Menge auf unter 1 Gew.% der Pfropfgrundlage B.2 zu beschränken.

Bevorzugte "andere" polymerisierbare, ethylenisch ungesättigte Monomere, die neben den Acrylsäureestern gegebenenfalls zur Herstellung der Pfropfgrundlage B.2 dienen können, sind z. B. Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage B.2 sind Emulsionspolymerisate, die einen Gelgehalt von mindestens 60 Gew.% aufweisen.

Weitere geeignete Pfropfgrundlagen gemäß B.2 sind Silikonkautschuke mit pfropfaktiven Stellen, wie sie in den DE-A 3 704 657, DE-A 3 704 655, DE-A 3 631 540 und DE-A 3 631 539 beschrieben werden.

Der Gelgehalt der Pfropfgrundlagen B.2 wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Die mittlere Teilchengröße d₅₀ ist der Durchmesser, oberhalb und unterhalb dessen jeweils 50 Gew.% der Teilchen liegen. Er kann mittels Ultrazentrifugenmessung (W. Scholtan, H. Lange, Kolloid, Z. und Z. Polymere 250 (1972), 782-1796) bestimmt werden.

### Komponente C

Die Komponente C stellt eine Mischung aus zwei thermoplastischen Copolymerisaten dar, welche nach dem Lösungs-, Masse- oder Suspensionsverfahren hergestellt wurden. Die Copolymerisate sind harzartig, thermoplastisch und kautschukfrei. Die Copolymerisate besitzen mittlere Molekulargewichte M_{w} (Gewichtsmittel, ermittelt durch GPC, Lichtstreuung oder Sedimentation) zwischen 15.000 und 300.000, bevorzugt zwischen 60.000 und 250.000, insbesondere zwischen 80.000 und 200.000.

Ganz besonders bevorzugt sind die Komponente C.1.1 und C.2.1 Styrol und die Komponente C.1.2 und C.2.2 Acrylnitril.

### Komponente D

Darüber hinaus kann die Zusammensetzung weitere handelsübliche Polymeradditive wie beispielsweise Flammschutzmittel (z.B. Organophosphate, Silikone oder halogenierte organische Verbindungen), Antidrippingmittel (beispielsweise Verbindungen der Substanzklassen der fluorierten Polyolefine, der Silikone sowie Aramidfasern), Gleit- und Entformungsmittel (beispielsweise Pentaerythrittetrastearat), Nukleiermittel, Antistatika, Stabilisatoren, Füll- und Verstärkungsstoffe (beispielsweise Glas- oder Carbonfasern, Glimmer, Talk, Wollastonit, Kaolin, CaCO₃ und Glasschuppen) sowie Farbstoffe und Pigmente enthalten. Diese Additve kommen in den erfindungsgemäßen Formmassen in Konzentrationen von bis zu 20 Gew.-%, bevorzugt von bis zu 10 Gew.-%, insbesondere von bis zu 5 Gew.-% bezogen auf die Zusammensetzung zum Einsatz.

Alle Gewichtsteil-Angaben in dieser Anmeldung sind so normiert, dass die Summe der Gewichtsteile der Komponenten A) bis C) und gegebenenfalls D) in der Zusammensetzung gleich 100 gesetzt wird.

Bei der Herstellung der Formmassen werden in einem ersten Schritt die Komponente B oder eine Teilmenge der Komponente B mit der Komponente C oder eine Teilmenge der Komponente C zu einem Präcompounds umgesetzt. In einer besonders bevorzugten Ausführungsform wird im ersten Schritt ein emissionsarmes Präcompound aus einem Pfropfpolymer B und der Komponente C durch Compoundierung unter Vakuumentgasung hergestellt. Besonders vorteilhaft ist es, bei dieser Entgasungscompoundierung die Komponente B in feuchtem Zustand (d.h. in Anwesenheit von Wasser) gemäß dem Verfahren einzusetzen, welches in EP 0 768 157 A1 und EP 0 867 463 A1 beschrieben ist. Besonders geeignet sind Präcompounds, deren Gesamtgehalt flüchtiger organischer Verbindungen weniger als 400 mg/kg, bevorzugt weniger als 300 mg/kg, insbesondere weniger als 200 mg/kg beträgt. Im zweiten Verfahrensschritt werden die übrigen Bestandteile und das Präcompound in bekannter Weise vermischt und bei Temperaturen von 200°C bis 300°C in üblichen Aggregaten wie Innenknetern, Extrudern und Doppelwellenschnecken schmelzcompoundiert oder schmelzextrudiert. In einer bevorzugten Ausführungsform wird bei diesem zweiten Compoundierungsschritt zwecks weiterer Entgasung flüchtiger Bestandteile (wie z.B. Restmonomere und Restlösungsmittel) ein Unterdruck von <500 mbar, bevorzugt <150 mbar, insbesondere <100 mbar angelegt. Mit diesem Verfahren lassen sich erfindungsgemäße Formmassen herstellen, welche die Anforderungen der Automobilindustrie an Materialien im Automobilinnenraum bezüglich der Begrenzung der Emissionen flüchtiger organischer Bestandteile erfüllen. Auf diese Weise lassen sich PC/ABS-Zusammensetzungen herstellen, welche gemäß der Automobilnorm VDA 277 ein Emissionswert von weniger als 30 µg Kohlenstoff-Äquivalent / g Material, bevorzugt weniger als 20 µg Kohlenstoff-Äquivalent / g Material und besonders bevorzugt weniger als 15 µg KohlenstoffÄquivalent / g Material aufweisen.

Gegenstand der Erfindung ist daher auch ein Verfahren zur Herstellung emissionsarmer erfindungsgemäßer Zusammensetzungen.

Die erfindungsgemäß erzeugten Formmassen können zur Herstellung von Formkörpern jeder Art verwendet werden. Diese können durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien. Beispiele für solche Formkörper sind Folien, Profile, Bauteile im Automobilbereich, Gehäuseteile jeder Art, z.B. für Haushaltsgeräte wie Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen.

Die erfindungsgemäß erzeugten Formmassen können beispielsweise auch zur Herstellung von folgenden Formkörpern oder Formteilen verwendet werden: Innenausbauteile für Schienenfahrzeuge, Schiffe, Flugzeuge, Busse und andere Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, Flächige Wandelemente, Gehäuse für Sicherheitseinrichtungen, wärmeisolierte Transportbehältnisse, Formteile für Sanitär- und Badausrüstungen, Abdeckgitter für Lüfteröffnungen, Gehäuse für Gartengeräte.

Insbesondere eignen sich die Zusammensetzungen zur Herstellung dünnwandiger sicherheitsrelevanter Teile für den Automobilinnenraumbau, besonders bevorzugt für solche Teile, an die erhöhte Ansprüche an die mechanischen Eigenschaften und die Chemikalienbeständigkeit gestellt werden.

Gegenstand der Erfindung sind daher auch ein Verfahren zur Herstellung der Zusammensetzungen.

Die folgenden Beispiele dienen der weiteren Erläuterung der Erfindung.

### Beispiele

### Komponente A

Lineares Polycarbonat auf Basis Bisphenol-A mit einem gewichtsgemittelten Molekulargewicht M_{w} von 26 kg/mol (bestimmt durch GPC).

### Komponente B

Pfropfpolymerisat von 40 Gewichtsteilen eines Copolymerisats aus Styrol und Acrylnitril im Gewichtsverhältnis von 72:28 auf 60 Gewichtsteilen teilchenförmigen vernetzten Polybutadienkautschuk (mittlerer Teilchendurchmesser d₅₀ = 0,3 µm), hergestellt durch Emulsionspolymerisation. Das Pfropfpolymerisat weist einen Gelgehalt von 85 Gew.-% auf.

### Komponente C1

Copolymerisat aus 72 Gewichtsteilen Styrol und 28 Gewichtsteilen Acrylnitril mit einem gewichtsgemitteltem Molekulargewicht M̅_{w} von 100 kg/mol (bestimmt durch GPC), hergestellt nach dem Masseverfahren.

### Komponente C2

Copolymerisat aus 77 Gew.-% Styrol und 23 Gew.-% Acrylnitril mit einem gewichtsgemitteltem Molekulargewicht M̅_{w} von 130 kg/mol (bestimmt durch GPC), hergestellt nach dem Masseverfahren.

### Komponente D

- Additive:: **D1:** Pentaerythrittetrastearat
**D2:** Phosphitstabilisator

### Präcompound aus B und C1

Zur Herstellung eines emissionsarmen Präcompounds werden 50 Gew.-Teile der Komponente B und 50 Gew.-Teile der Komponente C1 (jeweils bezogen auf 100 Gew.-Teile Präcompound) unter Vakuumentgasung compoundiert. Die genaue Durchführung erfolgt entsprechend dem in EP 0 768 157 A1 und EP 0 867 463 A1 beschriebenen Verfahren der Entgasungscompoundierung. Das resultierende Präcompound weist einen Gesamtgehalt flüchtiger organischer Verbindungen von weniger als 300 ppm auf.

### Herstellung und Prüfung der erfindungsgemäß erzeugten Formmassen

Das Mischen der Komponenten erfolgt auf einem Zweiwellenextruder (ZSK25 der Fa. Werner und Pfleiderer) bei einer Massetemperatur von 260°C und einem Vakuum von 80 mbar. Die Formkörper werden (wenn nicht anders beschrieben) bei 260°C Massetemperatur und einer Werkzeugtemperatur von 80°C auf einer Spritzgießmaschine Typ Arburg 270 E hergestellt.

Der multiaxiale Durchstoßversuch erfolgt in Anlehnung an ISO 6603-2 bei -30°C an quadratischen Platten der Abmessung 8 cm x 8 cm x 2 mm. Je Einstellung werden 10 Platten geprüft. Beurteilt wird a) das Bruchbild und b) die durchschnittliche Gesamtenergieaufnahme. Das Bruchbild wird dahingehend beurteilt, ob es bei mehr als einer der 10 Platten zu einem splitternden, d.h. spröden Materialversagen kommt.

Die Verarbeitungsstabilität wird beurteilt anhand der IZOD-Kerbschlagzähigkeit gemäß ISO 180/1A bei -30°C, welche an Probekörpern der Abmessung 80 mm x 10 mm x 4 mm bestimmt wird, wobei die Probekörper bei einer erhöhten Masse-Temperatur von 300°C unter ansonsten unveränderten Spritzgussparametern gefertigt werden.

Das Spannungsrissverhalten unter Chemikalieneinwirkung (ESC-Verhalten) wird an Stäben der Abmessung 80 mm x 10 mm x 4 mm untersucht. Als Testmedium wird eine Mischung aus 50 Vol.-% Toluol und 50 Vol.-% Isooktan verwendet. Die Probekörper werden mittels einer Kreisbogenschablone vorgedehnt (Randfaserdehnung beträgt 2,4 %) und bei 23°C im Testmedium gelagert. Bestimmt wird die Zeit bis zum Bruch unter diesen Bedingungen.

Die Erweichungstemperatur Vicat B/120 wird gemäß ISO 306 an Prüfstäben der Abmessung 80 mm x 10 mm x 4 mm bestimmt.

Die Schmelzeviskosität wird bei 260°C und einer Scherrate von 1000 s⁻¹ gemäß DIN 54811 bestimmt.

Die Emissionen flüchtiger organischer Verbindungen (VOC) wird gemäß Automobilstandard VDA 277 (PV 3341 der VW-Spezifikation) als µg Kohlenstoff-Äquivalent / g Material bestimmt. Die Messung erfolgt an Prüfkörpern, die bei 260°C Massetemperatur hergestellt wurden.

Eine Zusammenstellung der Eigenschaften der Formmassen ist in Tabelle 1 gegeben.

Die Versuchsergebnisse zeigen, dass die PC/ABS-Zusammensetzung gemäß Vergleichsbeispiel 1, die als Komponente C ausschließlich SAN mit einem Acrylnitrilgehalt von 28 Gew.-% (Komponente C1) enthält, zwar ein gutes ESC-Verhalten, jedoch eine unzufriedenstellende Duktilität im multiaxialen Durchstoßversuch bei tiefen Temperaturen aufweist.

Ein entsprechendes Resultat wird auch in Vergleichsbeispiel 2 erzielt, welches einen zu geringen Anteil an SAN mit einem Acrylnitrilgehalt von 23 Gew.-% (Komponente C2) enthält.

Die PC/ABS-Zusammensetzung gemäß Vergleichsbeispiel 3, die als Komponente C ausschließlich SAN mit einem Acrylnitrilgehalt von 23 Gew.-% (Komponente C2) enthält, weist eine zufriedenstellende Duktilität im multiaxialen Durchstoßversuch bei tiefen Temperaturen, aber ein schlechtes ESC-Verhalten auf.

Die PC/ABS-Zusammensetzungen gemäß den Beispielen 4 bis 6, welche als Komponente C beide SAN-Typen C1 und C2 enthalten und wobei das SAN mit einem Acrylnitrilgehalt von 23 Gew.-% (Komponente C2) in einem Anteil von 15 bis 30 Gew.-% bezogen auf die Summe der Gewichtsteile der Komponenten C1 und C2 vorliegt, zeigen eine Kombination aus guter Tieftemperaturduktilität im multiaxialen Durchstoßversuch und gutem ESC-Verhalten unter Beibehaltung einer guten Schmelzefließfähigkeit, guter Verarbeitungsstabilität und guter Wärmeformbeständigkeit. Darüber hinaus zeichnet sich die Zusammensetzung gemäß Beispiel 6 durch eine sehr niedrige Emission an flüchtigen organischen Verbindungen aus (Messung gemäß der Methode VDA 277).

**Tabelle 1:** Formmassen und ihre Eigenschaften

| | | **1 (Vergleich)** | **2 (Vergleich)** | **3 (Vergleich)** | **4 (Referenz)** | **5 (Referenz)** | **6** |
|---|---|---|---|---|---|---|---|
| **Komponenten [Gew.-Teile]** | | | | | | | |
| A | | 42,6 | 42,6 | 42,6 | 42,6 | 42,6 | 57,5 |
| B | | 23,8 | 23,8 | 23,8 | 23,8 | 23,8 | 17,8*⁾ |
| C1 | | 32,7 | 30,7 | | 27,8 | 22,8 | 17,8*⁾ |
| C2 | | - | 2,0 | 32,7 | 5,0 | 9,9 | 6,0 |
| D1 | | 0,75 | 0,75 | 0,75 | 0,75 | 0,75 | 0,75 |
| D2 | | 0,15 | 0,15 | 0.15 | 0.15 | 0,15 | 0,15 |
| Berechnetes Verhältnis C2/(C1+C2)*100% | | 0 | 6% | 100% | 15 % | 30% | 25 % |

| **Eigenschaften** | | | | | | | |
|---|---|---|---|---|---|---|---|
| Splitterndes Materialversagen im Durchstoßversuch (-30°C) | | ja | ja | nein | nein | nein | nein |
| Energieaufnahme im Durchstoßversuch (-30°C) | [J] | 38 | 38 | 42 | 43 | 42 | 48 |
| Kerbschlagzähigkeit a_{K} (300°C/-30°C) | [kJ/m²] | 13 | 19 | 19 | 17 | 18 | n.b. |
| ESC (Zeit bis Bruch) | [min] | 34 | 32 | 4 | 38 | 25 | n.b. |
| Vicat B/120 | [°C] | 112 | 112 | 111 | 112 | 112 | 121 |
| Schmelzeviskosität | [Pas] | 195 | 197 | 196 | 192 | 195 | 222 |
| Emission gemäß VDA 277 | [µg C/g] | > 30^{#)} | > 30^{#)} | > 30^{#)} | > 30^{#)} | > 30^{#)} | 11 |

| | | | | | | | |
|---|---|---|---|---|---|---|---|
| *⁾ B und C1 werden als Präcompound eingesetzt. ^{#)} Anforderung an Emission gemäß VDA 277 war maximal 30 µg C/g. Werte größer als 30 µg C/g werden daher nicht explizit angegeben. n.b.: nicht bestimmt | | | | | | | |

## Patentansprüche

1. Verfahren zur Herstellung thermoplastischer Formmassen einer Zusammensetzung enthaltend
A) 30 bis 80 Gew.-Teile aromatisches Polycarbonat und/oder Polyestercarbonat,
B) 5 bis 60 Gew.-Teile eines Pfropfpolymerisats und
C) 10 bis 60 Gew.-Teile einer Mischung aus
C.1) 40 bis 92 Gew.-% bezogen auf die Komponente C) eines ersten Copolymerisats hergestellt nach dem Lösungs-, Masse- oder Suspensionsverfahren aus
C.1.1) 65 bis 75 Gew.-% bezogen auf Komponente C.1) mindestens eines Monomeren ausgewählt aus der Gruppe der Vinylaromaten und kernsubstituierten Vinylaromaten und
C.1.2) 25 bis 35 Gew.-% bezogen auf Komponente C.1) mindestens eines Monomeren ausgewählt aus der Gruppe der Vinylcyanide, (Meth)Acrylsäure-(C₁-C₈)-Alkylester, ungesättigte Carbonsäuren und Derivate ungesättigter Carbonsäuren
und
C.2) 8 bis 60 Gew.-%, bezogen auf die Komponente C) eines zweiten Copolymerisats hergestellt nach dem Lösungs-, Masse- oder Suspensionsverfahren aus
C.2.1) 75,1 bis 85 Gew.-% bezogen auf Komponente C.2) mindestens eines Monomeren ausgewählt aus der Gruppe der Vinylaromaten und kernsubstituierten Vinylaromaten und
C.2.2) 15 bis 24,9 Gew.-% bezogen auf Komponente C.2) mindestens eines Monomeren ausgewählt aus der Gruppe der Vinylcyanide (Meth)Acrylsäure-(C₁-C₈)-Alkylester, ungesättigte Carbonsäuren und Derivate ungesättigter Carbonsäuren,
wobei die Copolymerisate mittlere Molekulargewichte MW zwischen 15.000 und 300.000 besitzen und sich der Gehalt der Komponente C.1.2) in Copolymer C.1) und der Gehalt der Komponente C.2.2) in Copolymer C.2) um 2,5 bis 7 Gew.-% voneinander unterscheiden,
und wobei
a) im ersten Schritt die Komponente B oder eine Teilmenge der Komponente B mit der Komponente C oder mit einer Teilmenge der Komponente C zu einem Präcompound durch Compoundierung unter Vakuumentgasung umgesetzt wird, und
b) im zweiten Schritt das Präcompound aus a) mit der Komponente A und gegebenenfalls weiteren Komponenten vermischt und bei Temperaturen von 200°C bis 300°C in üblichen Aggregaten wie Innenknetern, Extrudern und Doppelwellenschnecken schmelzcompoundiert oder schmelzextrudiert wird.

2. Verfahren gemäß Anspruch 1, wobei als Komponente B Pfropfpolymerisate von
B.1) 5 bis 95 Gew.-% bezogen auf B) einer Mischung aus
B.1.1) 65 bis 85 Gew.-% bezogen auf B.1 mindestens eines Monomeren ausgewählt aus der Gruppe der Vinylaromaten, kernsubstituierten Vinylaromaten und Methacrylsäure-(C₁-C₈)-Alkylester und
B.1.2) 15 bis 35 Gew.-% bezogen auf B.1 mindestens eines Monomeren ausgewählt aus der Gruppe der Vinylcyanide, (Meth)Acrylsäure-(C₁-C₈)-Alkylester und Derivate ungesättigter Carbonsäuren
auf
B.2) 95 bis 5 Gew.-% wenigstens einer Pfropfgrundlage mit einer Glasübergangstemperatur < 0°C, wobei die Pfropfgrundlage B.2 eine mittlere Teilchengröße (d₅₀-Wert) von 0,05 bis 10 µm hat,
eingesetzt werden.

3. Verfahren gemäß Anspruch 2, wobei eine Pfropfgrundlage B.2) ausgewählt ist aus Dienkautschuken.

4. Verfahren gemäß Ansprüche 1 bis 3, wobei Monomere B.1.1), C.1.1) und C.2.1) Styrol und Monomere B.1.2), C.1.2) und C.2.2) Acrylnitril sind.

5. Verfahren gemäß Anspruch 4 enthaltend Additive ausgewählt aus mindestens einem aus der Gruppe der Flammschutzmittel, Antidrippingmittel, Gleit- und Entformungsmittel, Nukleiermittel, Antistatika, Stabilisatoren, Füll- und Verstärkungsstoffe, Farbstoffe und Pigmente.

6. Verfahren gemäß Anspruch 1, wobei im ersten Schritt die Komponente B oder eine Teilmenge der Komponente B in Anwesenheit von Wasser mit einem der Copolymere C.1 oder C.2 oder mit einer Teilmenge der Copolymere C.1 oder C.2 zu einem Präcompound durch Compoundierung unter Vakuumentgasung umgesetzt wird.

7. Verfahren gemäß Anspruch 1 oder 6, wobei im zweiten Verfahrenschritt bei der Compoundierung ein Vakuum angelegt wird.

## Claims

1. Process for producing thermoplastic moulding compositions of composition comprising
A) from 30 to 80 parts by weight of aromatic polycarbonate and/or polyester carbonate,
B) from 5 to 60 parts by weight of a graft polymer and
C) from 10 to 60 parts by weight of a mixture of
C.1) from 40 to 92% by weight, based on component C), of a first copolymer produced by the solution process, bulk process or suspension process, made of
C.1.1) from 65 to 75% by weight, based on component C.1), of at least one monomer selected from the group of the vinylaromatics and ring-substituted vinylaromatics and
C.1.2) from 25 to 35% by weight, based on component C.1), of at least one monomer selected from the group of the vinyl cyanides, C₁-C₈-alkyl (meth)acrylates, unsaturated carboxylic acids and derivatives of unsaturated carboxylic acids
and
C.2) from 8 to 60% by weight, based on component C), of a second copolymer produced by the solution process, bulk process or suspension process, made of
C.2.1) from 75.1 to 85% by weight, based on component C.2), of at least one monomer selected from the group of the vinylaromatics and ring-substituted vinylaromatics and
C.2.2) from 15 to 24.9% by weight, based on component C.2), of at least one monomer selected from the group of the vinyl cyanides, C₁-C₈-alkyl (meth)acrylates, unsaturated carboxylic acids and derivatives of unsaturated carboxylic acids,
where the average molecular weights M_{w} of the copolymers are from 15 000 to 300 000 and, the content of the component C.1.2) in copolymer C.1) and the content of component C.2.2) in copolymer C.2) differ from one another by from 2.5 to 7% by weight,
and where
a) in the first step, component B, or some of component B, is reacted with component C or with some of component C to give a precompounded material, through compounding with vacuum devolatilization, and
b) in the second step, the precompounded material from a) is mixed with component A and optionally with further components and is extruded in the melt or compounded in the melt at temperatures of from 200°C to 300°C in conventional assemblies, such as internal mixers, extruders, and twin-screw systems.

2. Process according to Claim 1, where component B used comprises graft polymers of
B.1) from 5 to 95% by weight, based on B), of a mixture of
B.1.1) from 65 to 85% by weight, based on B.1, of at least one monomer selected from the group of the vinylaromatics, ring-substituted vinylaromatics and C₁-C₈-alkyl methacrylates and
B.1.2) from 15 to 35% by weight, based on B.1, of at least one monomer selected from the group of the vinyl cyanides, C₁-C₈-alkyl (meth)acrylates and derivatives of unsaturated carboxylic acids,
onto
B.2) from 95 to 5% by weight of at least one graft base with a glass transition temperature < 0°C, where the median particle size (d₅₀ value) of the graft base B.2 is from 0.05 to 10 µm.

3. Process according to Claim 2, where a graft base B.2) is one selected from diene rubbers.

4. Process according to Claims 1 to 3, where monomers B.1.1), C.1.1) and C.2.1) are styrene and monomers B.1.2), C.1.2) and C.2.2) are acrylonitrile.

5. Process according to Claim 4, comprising additives selected from at least one from the group of the flame retardants, antidrip agents, lubricants and mould-release agents, nucleating agents, antistatic agents, stabilizers, filler and reinforcing materials, dyes and pigments.

6. Process according to Claim 1, where, in the first step, component B, or some of component B, is reacted in the presence of water with one of the copolymers C.1 or C.2 or with some of the copolymers C.1 or C.2 to give a precompounded material through compounding with vacuum devolatilization.

7. Process according to Claim 1 or 6, where a vacuum is applied in the second step during compounding.

## Revendications

1. Procédé pour la production de matières à mouler thermoplastiques ayant une composition contenant
A) 30 à 80 parties en poids de polycarbonate aromatique et/ou polyestercarbonate,
B) 5 à 60 parties en poids d'un polymérisat greffé et
C) 10 à 60 parties en poids d'un mélange de
C.1)40 à 92 % en poids, par rapport au composant C), d'un premier copolymérisat préparé selon le procédé en solution, en masse ou en suspension à partir de
C.1.1) 65 à 75 % en poids, par rapport au composant C.1), d'au moins un monomère choisi dans le groupe des composés vinylaromatiques et composés vinylaromatiques substitués sur le noyau et
C.1.2) 25 à 35 % en poids, par rapport au composant C.1), d'au moins un monomère choisi dans le groupe des cyanures de vinyle, (méth)acrylates d'alkyle en C₁-C₈, acides carboxyliques insaturés et dérivés d'acides carboxyliques insaturés
et
C.2) 8 à 60 % en poids, par rapport au composant C), d'un deuxième copolymérisat préparé selon le procédé en solution, en masse ou en suspension à partir de
C.2.1) 75,1 à 85 % en poids, par rapport au composant C.2), d'au moins un monomère choisi dans le groupe des composés vinylaromatiques et composés vinylaromatiques substitués sur le noyau et
C.2.2) 15 à 24,9 % en poids, par rapport au composant C.2), d'au moins un monomère choisi dans le groupe des cyanures de vinyle, (méth)acrylates d'alkyle en C₁-C₈, acides carboxyliques insaturés et dérivés d'acides carboxyliques insaturés,
les copolymérisats ayant des masses moléculaires moyennes M_{w} comprises entre 15 000 et 300 000 et la concentration du composant C.1.2) dans le copolymère C.1) et la concentration du composant C.2.2) dans le copolymère C.2) diffèrent l'une de l'autre de 2,5 à 7 % en poids,
et dans lequel
a) dans la première étape on convertit en un pré-compound par compoundage avec dégazage sous vide le composant B ou une quantité partielle du composant B avec le composant C ou avec une quantité partielle du composant C, et
b) dans la deuxième étape on mélange le pré-compound provenant de a) avec le composant A et éventuellement d'autres composants et on soumet ce mélange à un compoundage par fusion ou à une extrusion par fusion à des températures de 200 °C à 300 °C dans des appareils usuels tels que des malaxeurs internes, des extrudeuses et des vis double arbre.

2. Procédé selon la revendication 1, dans lequel on utilise comme composant B des polymérisats greffés de
B.1) 5 à 95 % en poids, par rapport à B), d'un mélange de
B.1.1) 65 à 85 % en poids, par rapport à B.1, d'au moins un monomère choisi dans le groupe des composés vinylaromatiques, composés vinylaromatiques substitués sur le noyau et (méth)acrylates d'alkyle en C₁-C₈ et
B.1.2) 15 à 35 % en poids, par rapport à B.1, d'au moins un monomère choisi dans le groupe des cyanures de vinyle, (méth)acrylates d'alkyle en C₁-C₈ et dérivés d'acides carboxyliques insaturés,
sur
B.2) 95 à 5 % en poids d'au moins une base de greffage ayant une température de transition vitreuse < 0 °C, la base de greffage B.2 ayant une taille moyenne de particule (valeur d₅₀) de 0,05 à 10 µm.

3. Procédé selon la revendication 2, dans lequel une base de greffage B.2) est choisie parmi des caoutchoucs diène.

4. Procédé selon les revendications 1 à 3, dans lequel les monomères B.1.1), C.1.1) et C.2.1) sont le styrène et les monomères B.1.2), C.1.2) et C.2.2) sont l'acrylonitrile.

5. Procédé selon la revendication 4, contenant des additifs choisis parmi au moins l'un du groupe des agents ignifuges, agents anti-coulure, lubrifiants et agents de démoulage, agents de nucléation, agents antistatiques, stabilisants, charges et matières de renfort, colorants et pigments.

6. Procédé selon la revendication 1, dans lequel on convertit dans la première étape par compoundage avec dégazage sous vide le composant B ou une quantité partielle du composant B en présence d'eau avec l'un des copolymères C.1 ou C.2 ou avec une quantité partielle des copolymères C.1 ou C.2, en un pré-compound.

7. Procédé selon la revendication 1 ou 6, dans lequel lors du compoundage dans la deuxième étape du procédé on applique un vide.
